(19) Europäisches Patentamt
European Patent Office
Office européen des brevets

(11) **EP 2 099 584 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(21) Anmeldenummer: **06762665.5**

(22) Anmeldetag: **18.07.2006**

(51) Int Cl.:
*H02K 11/24* *(2016.01)*   *B30B 15/00* *(2006.01)*
*B30B 1/18* *(2006.01)*   *H02K 7/06* *(2006.01)*
*B23P 19/02* *(2006.01)*

(86) Internationale Anmeldenummer:
**PCT/EP2006/007029**

(87) Internationale Veröffentlichungsnummer:
**WO 2008/009299 (24.01.2008 Gazette 2008/04)**

(54) **FÜGEEINHEIT**

JOINING UNIT

UNITÉ D'ASSEMBLAGE

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**16.09.2009 Patentblatt 2009/38**

(73) Patentinhaber: **Kistler Holding AG**
**8408 Winterthur (CH)**

(72) Erfinder: **MÜLLER, Alexander**
**73547 Lorch (DE)**

(56) Entgegenhaltungen:
**DE-A1-102004 054 836    DE-U1- 20 108 706**
**DE-U1- 20 305 789    US-A- 5 587 633**
**US-B1- 6 182 521    US-B1- 6 293 155**

## Beschreibung

Die Erfindung betrifft eine Fügeeinheit gemäß dem Oberbegriff des Anspruchs 1.

Eine derartige Fügeeinheit ist aus der DE 203 05 789 U1 bekannt.

Die dort beschriebene Fügeeinheit weist einen Spindelantrieb zur Erzeugung einer Linearbewegung eines Fügewerkzeugs auf. Der Spindelantrieb ist von einem eine Spindel umschließenden Hohlwellenmotor gebildet.

Der Hohlwellenmotor ist als Elektroantrieb ausgebildet und weist einen Stator sowie einen fest mit der Spindel verbundenen Rotor auf. Durch den Rotor wird die Spindel in eine Drehbewegung versetzt.

Zur Generierung der Linearbewegung des Fügewerkzeugs ist ein Stößel vorgesehen, welcher die Unterseite eines rohrförmigen Gehäuseeinsatzes bildet, in dessen Innenraum ein Teilbereich der Spindel verläuft. An der Oberseite des Gehäuseeinsatzes ist eine Mutter vorgesehen, welche in ein Gewinde an der Mantelfläche der Spindel greift. Durch diese Kopplung wird die Drehbewegung der Spindel direkt in eine Längsbewegung des Stößels und damit des Fügewerkzeugs umgesetzt.

Ein Vorteil dieser Fügeeinheit besteht darin, dass zur Umsetzung der Drehbewegung des Spindelantriebs in eine Linearbewegung kein Getriebe benötigt wird.

Die Fügeeinheit weist somit einen einfachen und kostengünstigen Aufbau auf.

Ein wesentlicher Nachteil derartiger Fügeeinheiten besteht darin, dass deren Funktionssteuerung vorwiegend durch externe Einheiten erfolgt. Zwar sind in der Fügeeinheit selbst Positionssätze hinterlegt, die den Verlauf der Geschwindigkeit des Fügewerkzeugs in Abhängigkeit von Zielpositionen relativ zu dem zu bearbeitenden Werkstück vorgeben. Jedoch muss die Aktivierung des jeweiligen Positionssatzes durch eine externe Einheit wie zum Beispiel einer SPS-Steuerung erfolgen.

Weiterhin ist es bekannt, mit derartigen externen Einheiten eine Kraftabschaltung zum Schutz gegen Beschädigungen des Fügewerkzeugs oder des Werkstücks durchzuführen. Bei einer derartigen Kraftabschaltung wird bei Überschreiten einer maximal zulässigen Kraft auf die Spindel über die externe Einheit ein Notstopp der Fügeeinheit ausgelöst. Aufgrund der für die Signalbearbeitung in der externen Einheit erforderlichen Zeit sowie der Zeit für die Signalübertragung zwischen der Fügeeinheit und der externen Einheit kann es vorkommen, dass der Notstopp nicht rechtzeitig ausgelöst wird, was zu Beschädigungen von Komponenten der Fügeeinheit infolge zu hoher Kraftbeanspruchung führen kann.

Weiterhin ist ein System, bei welchem wesentliche Kontrollfunktionen durch externe Einheiten wahrgenommen werden, relativ komplex und damit für den Anwender schwer handhabbar.

Der Erfindung liegt die Aufgabe zugrunde, eine Fügeeinheit der eingangs genannten Art bereitzustellen, die neben einer hohen Funktionalität und Betriebssicherheit einen einfachen und kostengünstigen Aufbau aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Fügeeinheit umfasst einen Spindelantrieb in Form eines eine Spindel umschließenden Hohlwellenmotors, welcher zur Erzielung einer Linearbewegung eines Fügewerkzeugs zur Durchführung eines Fügeprozesses dient. Die Fügeeinheit umfasst Mittel zur Vorgabe und/oder Bestimmung der beim Fügeprozess auftretenden Kräfte und/oder der Bewegung des Fügewerkzeugs.

Bei der erfindungsgemäßen Fügeeinheit sind die wesentlichen Funktionen, die zur Kontrolle und Vorgabe des Fügeprozesses benötigt werden, in der Fügeeinheit selbst integriert. Insbesondere ist die gesamte Ablaufsteuerung des Fügeprozesses in der Fügeeinheit selbst integriert, so dass diese ein geschlossenes, weitgehend autarkes System bildet. Die so ausgebildete Fügeeinheit weist bei einem kompakten Aufbau eine hohe Funktionalität auf und ist zudem für eine Bedienperson einfach handhabbar.

Durch die erfindungsgemäße Ausbildung des Spindelantriebs in Form eines Hohlwellenmotors wird für den Antrieb des Fügewerkzeug kein Getriebe benötigt, so dass die Fügeeinheit ein kleines Bauvolumen aufweist und kostengünstig herstellbar ist. Weiterhin ist ein derartiger Antrieb gut regelbar und weist eine hohe Dynamik auf. Zudem ist beim Betrieb eines derartigen getriebelosen Antriebs keine eingangsseitige Drehzahleinschränkung gegeben. Weiterhin ist vorteilhaft, dass mit dem Getriebe ein Verschleißteil entfällt, welches gewartet werden müsste. Da ein Getriebe immer ein gewisses Getriebespiel aufweist, kann mit Fügeeinheiten, die Antriebe ohne Getriebe aufweisen, generell eine höhere Positioniereinheit erzielt werden als bei Systemen, die mit Getrieben arbeiten.

Besonders vorteilhaft sind wesentliche Funktionen zur Ablaufsteuerung und Kontrolle des Fügeprozesses in einem Controller des als Elektroantrieb ausgebildeten Hohlwellenmotors integriert.

Insbesondere können in diesem Controller nicht nur Positionssätze zur Vorgabe des zeitlichen Ablaufs des Fügeprozesses abgespeichert werden, vielmehr können die Positionssätze auch im Controller selbst aktiviert werden, so dass für die Ablaufsteuerung keine externe Einheiten benötigt werden.

Weiterhin können vom Controller Kontrollfunktionen zur Überwachung beziehungsweise Dokumentation des Fügeprozesses übernommen werden, wobei hierbei im Controller Signale eines Drehgebers zur Bestimmung der aktuellen Drehposition der Spindel und eines Kraftsensors, der die Kräfte auf die Spindel beziehungsweise das Fügewerkzeug misst, ausgewertet werden.

Hierbei kann insbesondere zur Dokumentation und Prüfung der Qualität des Fügeprozesses im Controller eine Kraft-Weg-Auswertung vorgenommen werden.

Weiterhin kann im Controller eine Kraftregelung integriert sein, mittels derer bei Auftreten hoher Kraftspitzen Beschädigungen von Komponenten der Fügeeinheiten vermieden werden. Besonders vorteilhaft wird die Kraftregelung derart durchgeführt, dass neben einer Geschwindigkeitsregelung auch die innerhalb des aktuell aktivierten Positionssatzes vorgegebene, mit dem Fügewerkzeug anzufahrende Zielposition entgegen der aktuellen Verfahrrichtung geändert wird. Dadurch wird ein Rückfahren des Fügewerkzeugs eingeleitet und dadurch bedingt ein Auflaufen des Fügewerkzeugs auf ein Hindernis verhindert.

Da die Kraftregelung im Controller des Elektroantriebs integriert ist und damit hierfür keine externe Einheiten benötigt werden, ist gewährleistet, dass die Kraftregelung sehr schnell erfolgen kann.

In einer besonders vorteilhaften Ausgestaltung weist die Fügeeinheit eine Endabschaltung auf, die zu einem Abschalten des Elektroantriebs bei Auftreten unzulässig hoher Kräfte führt und so die Fügeeinheit gegen Beschädigungen schützt. Besonders vorteilhaft weist die Endabschaltung eine Federlagerung des Kraftsensors auf, wobei unzulässig hohe Kräfte durch Einfedern der Federlagerung erkannt werden. Die so ausgebildete Endabschaltung weist nicht nur einen einfachen, robusten Aufbau auf, sondern schützt zugleich den Kraftsensor gegen Beschädigungen.

In einer weiteren zweckmäßigen Ausgestaltung weist die Fügeeinheit eine Haltebremse auf, mittels derer auch bei einem Netzausfall und bei einem hohen Gewicht des Fügewerkzeugs gewährleistet ist, dass die Spindel sicher in ihrer Sollposition gehalten wird.

Besonders vorteilhaft weist die Fügeeinheit hinsichtlich ihrer mechanischen Komponenten einen modularen Aufbau auf. Insbesondere das den Elektroantrieb und die Spindel aufnehmende Gehäuse sowie die Spindeln bilden modulare Einheiten, so dass die Fügeeinheit ohne großen Aufwand für unterschiedliche Hübe der Fügewerkzeuge konfiguriert werden kann.

Die erfindungsgemäße Fügeeinheit ist universell für Fügeprozesse aller Art einsetzbar. Dabei kann mit der Fügeeinheit insbesondere ein Fügen auf Position durchgeführt werden, bei welchem ein Teil, wie zum Beispiel ein Lager, in eine Aufnahme, wie zum Beispiel einen Lagersitz, bis zu einer vorgegebenen Einführtiefe eingefügt wird. Weiterhin kann mit einer Fügeeinheit ein Fügen auf Block durchgeführt werden, bei welchem ein Teil bis zu einem Bund oder allgemein einem Anschlag in eine Aufnahme eingefügt wird.

Des Weiteren kann die Fügeeinheit zu umformtechnischen Fügeverfahren, sogenannten Durchsetzfügen oder Clinchen eingesetzt werden. Bei derartigen Fügeverfahren werden formschlüssige Verbindungen durch Durchsetzen von mindestens zwei Fügeteilen hergestellt. Das Durchsetzen erfolgt in Verbindung mit einem Einschneiden oder Einpressen und anschließenden Kaltstauchen der Fügeteile.

Generell kann der erfindungsgemäße Spindelantrieb auch zur Erzeugung von Linearbewegungen weiterer Werkzeuge genutzt werden.

Weiterhin kann die Fügeeinheit zum Taumelnieten oder Prägen von Teilen eingesetzt werden.

Die Erfindung wird im Nachstehenden anhand der Zeichnungen erläutert. Es zeigen:

Figur 1:    Perspektivische Darstellung eines Ausführungsbeispiels einer Fügeeinheit.

Figur 2:    Schematische Darstellung des zeitlichen Ablauf eines mit der Fügeeinheit gemäß Figur 1 durchgeführten Fügeprozesses.

Figur 3:    Fahrprofil des Fügewerkzeugs der Fügeeinheit für den Fügeprozess gemäß Figur 2.

Figur 4:    Beispiel eines Kraft-Weg-Diagramm für einen mit der Fügeeinheit gemäß Figur 1 durchführbaren Fügeprozesses.

Figur 5:    Schematische Darstellung der Komponenten einer Endabschaltung für die Fügeeinheit gemäß Figur 1.

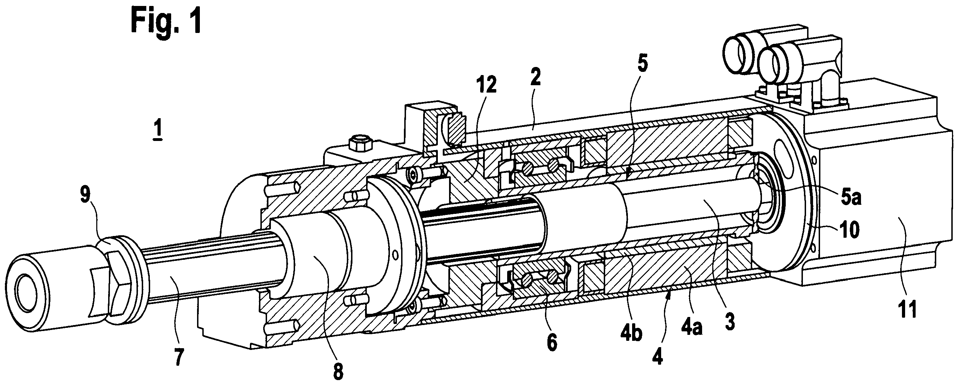

Figur 1 zeigt ein Ausführungsbeispiel einer Fügeeinheit 1. Die Fügeeinheit 1 ist in einem rotationssymmetrischen Gehäuse 2 integriert.

Im Innenraum des Gehäuses 2 ist eine Spindel 3 angeordnet, deren Längsachse in der Symmetrieachse des Gehäuses 2 verläuft. Die Spindel 3 ist bevorzugt von einer Kugelrollspindel oder einem Planetenrollantrieb gebildet.

Der Antrieb der Spindel 3 erfolgt mittels eines Hohlwellenmotors 4 und damit ohne Einsatz eines Getriebes. Der Hohlwellenmotor 4 ist als Elektroantrieb ausgebildet. Im vorliegenden Fall ist der Elektroantrieb als Servomotor ausgebildet. Der Stator 4a des Elektroantriebs ist an der Innenwand des Gehäuses 2 konzentrisch zur Spindelachse angeordnet. Mit der Spindel 3 ist ein rohrförmiger Körper 5 fest verbunden. Der rohrförmige Körper 5 ist im Wesentlichen hohlzylindrisch ausgebildet, wobei dessen Mantelfläche konzentrisch zur Spindel 3 und in vorgegebenem Abstand zu dieser angeordnet ist. An einer Stirnfläche weist der rohrförmige Körper 5 ein flanschförmiges Anschlussstück 5a auf, mit welchem der rohrförmige Körper 5 mit der Spindel 3 fest verbunden ist. Mit dem anderen längsseitigen Ende ist der rohrförmige Körper 5 mittels eines Lagers 6 drehbar gelagert.

Auf der Außenseite des rohrförmigen Körpers 5 ist der Rotor 4b in Form einer Anordnung von Permanentmagneten aufgebracht. Der Rotor 4b liegt dem Stator 4a des Elektroantriebs gegenüber.

An das freie längsseitige Ende der Spindel 3 schließt ein koaxial zu dieser verlaufender und fest mit dieser verbundener Stößel 7 an, der in einer Führungsbuchse 8 geführt wird, wobei die Führungsbuchse 8 im vorderen Bereich des Gehäuses 2 gelagert ist. Das vordere längsseitige Ende des Stößels 7 steht über die Stirnseite des Gehäuses 2 hervor. An diesem freien Ende des Stößels 7 ist ein Fügewerkzeug 9 zur Durchführung eines Fügeprozesses angeordnet.

Mittels des Elektroantriebs wird die Spindel 3 über den rohrförmigen Körper 5 in eine Drehbewegung versetzt. Diese Drehbewegung der Spindel 3 wird durch die Führungsbuchse 8 in eine in Richtung der Längsachse des Stößels 7 gerichtete Verschiebebewegung des Stößels 7 umgesetzt, da die Führungsbuchse 8 nicht nur eine Führung, sondern auch einen Verdrehschutz für den Stößel 7 bildet. Durch diese Linearbewegung des Stößels 7 führt das Fügewerkzeug 9 eine entsprechende Hubbewegung zur Durchführung eines Fügeprozesses aus.

Wie aus Figur 1 ersichtlich, ist im hinteren Bereich des Gehäuses 2 eine scheibenförmige Haltebremse 10 vorgesehen. Durch die Haltebremse 10 wird die Spindel 3 sicher in ihrer Position insbesondere auch dann gehalten, wenn das Fügewerkzeug 9 ein hohes Gewicht aufweist beziehungsweise wenn der Antrieb bei einem Netzausfall ausfällt.

An das hintere Ende des rohrförmigen Gehäuses 2 schließt ein Gehäuseansatz 11 an, an welchem Anschlüsse zum Anschluss eines nicht gesondert dargestellten Controllers vorgesehen sind. Der Controller ist Bestandteil des Elektroantriebs und dient zu dessen Steuerung.

Weiterhin übernimmt der Controller auch die Steuerung der gesamten Steuereinheit. Hierzu werden Signale eines im Gehäuseansatz integrierten Drehgebers in den Controller eingelesen. Mit dem Drehgeber erfolgt die Bestimmung der aktuellen Winkelposition der Spindel 3 sowie deren Drehzahl. Zudem ist ein den Stößel 7 umschließender Kraftsensor 12 vorgesehen, dessen Signale ebenfalls in den Controller eingelesen werden. Mit dem Kraftsensor 12 werden die auf den Stößel 7 und damit die auf das Fügewerkzeug 9 beziehungsweise die Spindel 3 wirkenden Kräfte bestimmt. Der Kraftsensor 12 kann als Sensorelemente Dehnmessstreifen oder Piezosensoren aufweisen.

Im Controller erfolgt die Ablaufsteuerung des mit der Fügeeinheit 1 durchzuführenden Fügeprozesses. Zur Ablaufsteuerung sind im Controller Positionssätze als Betriebsparameter abgespeichert, wobei zur Vorgabe des Fügeprozesses einzeln nacheinander in dem Controller bestimmte Positionssätze aktiviert werden. Ein Positionssatz beinhaltet jeweils die mit dem Fügewerkzeug 9 auszufahrende Zielposition sowie die Geschwindigkeit des Fügewerkzeugs 9, mit welcher die Zielposition angefahren wird.

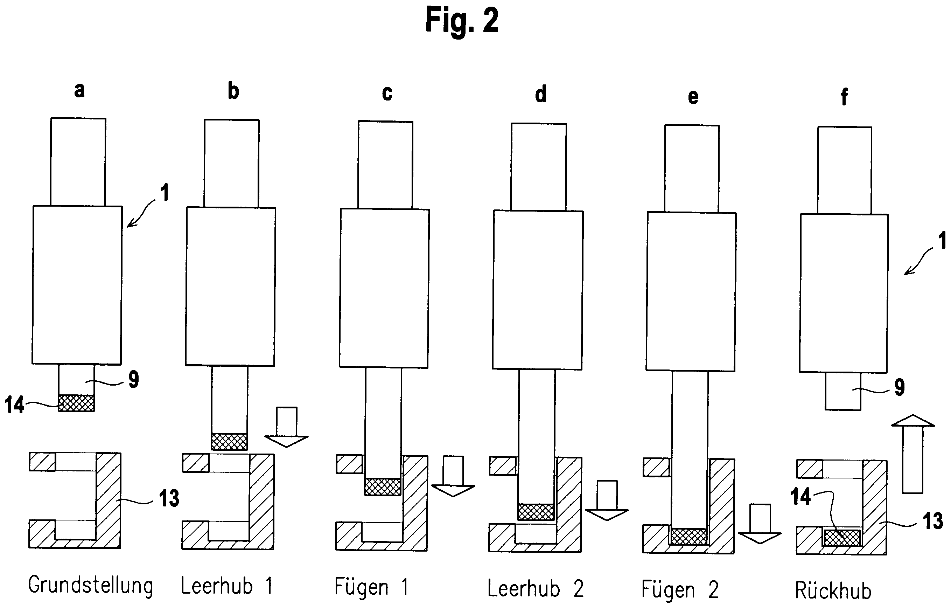

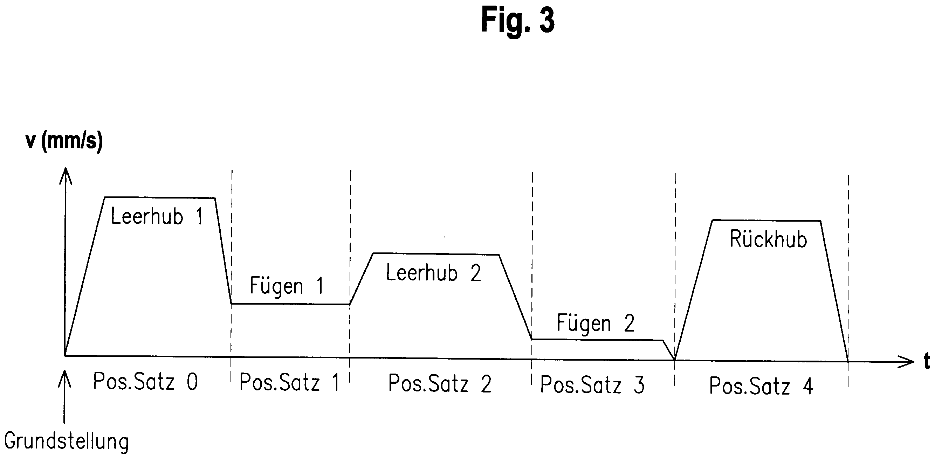

Ein Beispiel für einen derartigen Fügeprozess ist in den Figuren 2 und 3 veranschaulicht. Figur 2 zeigt die mit a bis f bezeichneten unterschiedlichen Phasen des Fügeprozesses. Figur 3 zeigt die für diese Phasen unterschiedlichen Geschwindigkeiten des Fügewerkzeugs 9.

In Figur 1 ist für die einzelnen Phasen a bis f des Fügeprozesses jeweils die Position und gegebenenfalls Bewegung der Fügeeinheit 1 mit dem Fügewerkzeug 9 relativ zu einer Halterung 13, die zur Aufnahme des zu bearbeitenden Werkstücks 14 dient, dargestellt.

Der Fügeprozess startet aus einer Grundstellung der Fügeeinheit 1 heraus (Phase a), in welcher das Fügewerkzeug 9 nicht bewegt wird und in Abstand zur Halterung 13 angeordnet ist.

In der darauffolgenden Phase b wird ein Positionssatz 0 aktiviert, so dass das Fügewerkzeug 9 wie in den Figuren 2, 3 dargestellt, mit einer ersten, im Positionssatz definierten Geschwindigkeit auf die Halterung 13 ohne Werkstück 14 zugeführt wird. Diese Phase ist mit Leerhub 1 bezeichnet.

In Phase c (Fügen 1) wird ein Fügeprozess simuliert und dabei das Fügewerkzeug 9 in die Halterung 13 mit einer zweiten, im Positionssatz 1 festgelegten Geschwindigkeit eingeführt.

Darauf folgt Phase d (Leerhub 2), in welcher das Fügewerkzeug 9 mit einer im Positionssatz 2 definierten Geschwindigkeit bewegt wird.

In Phase e (Fügen 2) erfolgt ein Fügen des Werkstücks 14 mit der im Positionssatz 3 festgelegten Geschwindigkeit.

Danach erfolgt in Phase f ein Rückhub mit einer im Positionssatz 4 definierten Geschwindigkeit. Hier wird das Fügewerkzeug 9 wieder aus der Halterung 13 herausgefahren.

In dem Controller des Elektroantriebs wird zudem auch eine Kraft-Weg-Auswertung übernommen. Hier wird durch Auswertung der Signale des Drehgebers und des Kraftsensors der Kraftverlauf in Abhängigkeit des vom Fügewerkzeug 9 zurückgelegten Wegs ermittelt. Zur Visualisierung dieses Kraftverlaufs können die entsprechenden Daten vom Controller an eine externe Einheit ausgegeben werden. Ein Beispiel eines derartigen Diagramms ist in Figur 3 dargestellt. Derartige Kraft-Weg-Verläufe dienen zur Überprüfung und Kontrolle der Qualität des Fügeprozesses. Bei dem Beispiel gemäß Figur 3 sind zwei Toleranzbänder $T_1$, $T_2$ vorgegeben. Ein fehlerfreier Fügeprozess liegt dann vor, wenn innerhalb vorgegebener Wegbereiche die entsprechende Kraft innerhalb der Toleranzbänder liegt.

In dem Controller ist weiterhin eine Kraftregelung integriert. Bei dieser Kraftregelung wird die Geschwindigkeit und auch die aktuelle Zielposition in dem aktuellen Positionssatz verändert, wenn die mit dem Kraftsensor 12 gemessene Kraft einen vorgegebenen Schwellwert überschreitet. Besonders vorteilhaft wird dabei die Zielposition entgegen der aktuellen Verfahrrichtung des Fügewerkzeugs 9 geändert. Die Geschwindigkeitsänderung und die Zielpositionsänderung erfolgt dabei in einem applikationsspezifisch vom Bediener vorgegebenen Rahmen. Eine den Schwellwert überschreitende Kraft tritt beispielsweise auf, wenn das Fügewerkzeug 9 gegen ein Hindernis aufläuft. Da die Zielposition entgegen der Verfahrrichtung des Fügewerkzeugs 9 geändert wird, wird durch die Kraftregelung erreicht, dass das Fügewerkzeug 9 zurückgefahren wird und so dem Hindernis ausweicht, wodurch Beschädigungen von Komponenten der Fügeeinheit 1 vermieden werden, das heißt es wird ein Überlastschutz für die Fügeeinheit 1 realisiert.

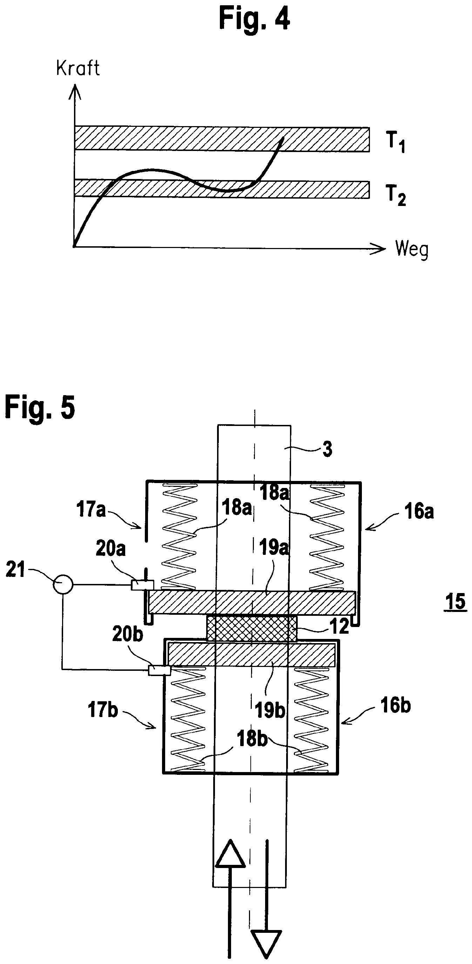

Figur 5 zeigt ein Beispiel einer Endabschaltung 15, die in der Fügeeinheit 1 gemäß Figur 1 integriert werden kann. In Figur 5 ist ein die Spindel 3 der Fügeeinheit 1 umschließender Kraftsensor 12 dargestellt. Alternativ kann dieser wie in Figur 1 dargestellt, den Stößel 7 umschließen.

Der Kraftsensor 12 gemäß Figur 5 ist mittels einer Federlagerung federnd gelagert. Die Federlagerung besteht aus zwei Federpaketen 16a, b, die in axialer Richtung der Spindel 3 beidseits des Kraftsensors 12 angeordnet sind. Jedes Federpaket 16a, b weist in einer Kammer 17a, b gelagerte Federn 18a, b auf, wobei der Boden 19a, b einer Kammer 17a, b gegen das Oberteil der Kammer 17a, b gegen die Federkräfte verschiebbar ist.

Die Federn 18a, b der Federpakete 16a, b sind jeweils mit einer Vorspannkraft vorgespannt, wobei die Vorspannkräfte jeweils einem Grenzwert entsprechen. Der Grenzwert G ist dabei definiert als

$$G = N + T$$

wobei N die Nennfügekraft und T ein positiver Toleranzwert ist.

Jedem Federpaket 16a, b ist ein Schalter 20a, b zugeordnet, wobei im vorliegenden Fall die Schalter 20a, b als Öffner ausgebildet sind. Die Signale der Schalter 20a, b sind auf einen Inverter 21 geführt und werden über diesen in den Controller eingelesen.

Überschreitet die auf den Kraftsensor 12 wirkende Kraft den Grenzwert, so werden je nach Kraftrichtung die Federn 18a, b des ersten oder zweiten Federpakets 16a, b eingefedert, wodurch der Schalter 20a oder b des jeweiligen Federpakets 16a oder b anspricht. Dieses Signal wird in den Controller eingelesen, worauf dieser einen Notstopp der Fügeeinheit 1 durchführt. Durch diese Endabschaltung erfolgt ein Schutz der Fügeeinheit 1 gegen die Nennfügekraft überschreitende Kraftspitzen.

Mit der Endabschaltung 15 kann insbesondere der Kraftsensor 12 gegen Überlast geschützt werden. Bei einer als Kugelrollspindel ausgebildeten Spindel wird zudem auch diese gegen Überlast geschützt.

**Patentansprüche**

1. Fügeeinheit (1) mit einem Spindelantrieb in Form eines eine Spindel (3) umschließenden Hohlwellenmotors (4) zur Erzielung einer Linearbewegung eines Fügewerkzeugs (9) zur Durchführung eines Fügeprozesses, wobei die Fügeeinheit (1) Mittel zur Vorgabe und/oder Bestimmung der beim Fügeprozess auftretenden Kräfte und/oder der Bewegung des Fügewerkzeugs (9) umfasst, **dadurch gekennzeichnet, dass** der Hohlwellenmotor (4) einen Elektroantrieb mit einem Controller zu dessen Steuerung aufweist, wobei der Controller Bestandteil des Elektroantriebs ist und zu dessen Steuerung dient; dass im Controller wenigstens ein Teil der Mittel zur Vorgabe und/oder Bestimmung der beim Fügeprozess auftretenden Kräfte und/oder der Bewegung des Fügewerkzeugs (9) integriert ist; dass die Fügeeinheit (1) einen Drehgeber zur Bestimmung der aktuellen Drehposition der mit dem Elektroantrieb angetriebenen Spindel (3) sowie einen Kraftsensor (12) zur Bestimmung der auf das Fügewerkzeug (9) wirkenden Kräfte aufweist; und dass im Controller in Abhängigkeit der Signale des Drehgebers und des Kraftsensors (12) eine Kraft-Weg- Auswertung des Fügeprozesses erfolgt.

2. Fügeeinheit nach Anspruch 1, **dadurch gekennzeichnet, dass** im Controller Positionssätze abgespeichert und dort zur Vorgabe von Fügeprozessen aktivierbar sind.

3. Fügeeinheit nach Anspruch 1 oder 2, **dadurch gekennzeichnet, dass** im Controller eine Regelungseinheit zur Durchführung einer Kraftregelung integriert ist; und dass bei der Kraftregelung die im aktuell aktivierten Positionssatz vorgegebene Zielposition verändert wird, falls die mit dem Kraftsensor (12) ermittelte Kraft einen vorgegebenen Schwellwert überschreitet.

4. Fügeeinheit nach Anspruch 4, **dadurch gekennzeichnet, dass** bei der Kraftänderung die Änderung der Zielposition entgegen der Verfahrrichtung des Fügewerkzeugs (9) erfolgt.

5. Fügeeinheit nach einem der Ansprüche 3 oder 4, **dadurch gekennzeichnet, dass** bei der Kraftregelung in Abhängigkeit der mit dem Kraftsensor (12) ermittelten Kraft die Geschwindigkeit des Fügewerkzeugs (9) verändert wird.

6. Fügeeinheit nach einem der Ansprüche 1 bis 5, **dadurch gekennzeichnet, dass** diese eine Endabschaltung zur Durchführung eines Notstopps des Elektroantriebs aufweist.

7. Fügeeinheit nach Anspruch 6, **dadurch gekenn-**

**zeichnet, dass** die Endabschaltung bei Überschreiten eines Grenzwerts der auf das Fügewerkzeug (9) einwirkenden Kraft anspricht.

8. Fügeeinheit nach Anspruch 7, **dadurch gekennzeichnet, dass** zur Vorgabe des Grenzwertes eine Federlagerung des Kraftsensors (12) vorgesehen ist, welche von zwei in Längsrichtung der Spindel (3) beiderseits des Kraftsensors (12) angeordneten Federpaketen (16a, b) gebildet ist, wobei die Vorspannungen der Federn (18a, b) der Federpakete (16a, b) dem Grenzwert entsprechen.

9. Fügeeinheit nach einem der Ansprüche 7 oder 8, **dadurch gekennzeichnet, dass** der Grenzwert der Summe der Nennfügekraft und eines Toleranzwerts entspricht.

10. Fügeeinheit nach einem der Ansprüche 8 oder 9, **dadurch gekennzeichnet, dass** jedem Federpaket (16a, b) ein Schalter (20a, b) zugeordnet ist, wobei jeder Schalter (20a, b) bei Überschreitung des Grenzwerts für das jeweilige Federpaket (16a, b) ein Schaltsignal generiert, welches im Controller zur Auslösung des Notstopps ausgewertet wird.

11. Fügeeinheit nach einem der Ansprüche 1 bis 10, **dadurch gekennzeichnet, dass** diese eine auf die Spindel (3) wirkende Haltebremse (10) aufweist.

12. Fügeeinheit nach einem der Ansprüche 1 bis 11, **dadurch gekennzeichnet, dass** deren mechanische Komponenten einen modularen Aufbau zur Anpassung an verschiedene, beim Fügeprozess durchzuführende Hübe des Fügewerkzeugs (9) aufweisen.

13. Fügeeinheit nach einem der Ansprüche 2 bis 12, **dadurch gekennzeichnet, dass** der den Hohlwellenmotor (4) bildende Elektroantrieb einen in einem Gehäuse (2) gelagerten Stator (4a) sowie einen Rotor (4b) aufweist, der auf einem mit der Spindel (3) fest verbundenen und diese umschließenden rohrförmigen Körper aufgebracht ist.

14. Fügeeinheit nach Anspruch 13, **dadurch gekennzeichnet, dass** an die Spindel (3) ein koaxial zu dieser verlaufender Stößel (7) anschließt, an dessen freies Ende das Fügewerkzeug (9) anbringbar ist, und dass der Stößel (7) in einer im Gehäuse (2) gelagerten Führungsbuchse (8) geführt ist, mittels derer die durch den Elektromotor bewirkte Drehbewegung der Spindel (3) in eine Längsbewegung des Stößels (7) umgesetzt wird.

15. Fügeeinheit nach Anspruch 14, **dadurch gekennzeichnet, dass** die einen modularen Aufbau aufweisenden Komponenten von der Spindel (3) und dem Gehäuse (2) gebildet sind.

**Claims**

1. A joining unit (1) having a spindle drive in the form of a hollow shaft motor (4) surrounding a spindle (3) to achieve a linear movement of a joining tool (9) for executing a joining process wherein said joining unit (1) comprises means for presetting and/or determining the forces exerted during the joining process and/or the movement of the joining tool (9), **characterized in that** said hollow shaft motor (4) comprises an electric drive including a controller for the control thereof, wherein said controller is a component of the electric drive and serves for the control thereof; further **characterized in that** said controller has integrated at least part of the means for presetting and/or determining the forces exerted during the joining process and/or the movement of the joining tool (9); that said joining unit (1) includes a rotary position sensor for determining the current rotary position of the spindle (3) driven by the electric drive as well as a force sensor (12) for determining the forces acting on the joining tool (9); and **in that** a force-displacement evaluation of the joining process is performed in said controller as a function of the signals from said rotary position sensor and said force sensor (12).

2. The joining unit according to claim 1, **characterized in that** sets of positions are stored within the controller where they can be activated for the presetting of joining processes.

3. The joining unit according to claim 1 or 2, **characterized in that** a control unit is integrated in the controller for performing a force control; and **in that** during said force control the target position predefined in the currently activated set of positions is adjusted if the force determined by the force sensor (12) exceeds a predetermined threshold value.

4. The joining unit according to claim 4, **characterized in that** during a force change the adjustment of the target position is performed against the direction of movement of the joining tool (9).

5. The joining unit according to any of claims 3 or 4, **characterized in that** during force control the velocity of the joining tool (9) is changed as a function of the force determined by the force sensor (12).

6. The joining unit according to any of claims 1 to 5, **characterized in that** said joining unit includes a limit switch for performing an emergency stop of the electric drive.

7. The joining unit according to claim 6, **characterized in that** said limit switch is actuated if the force acting on the joining tool (9) exceeds a limit value.

**8.** The joining unit according to claim 7, **characterized in that** a spring bearing of the force sensor (12) is provided for predetermining said limit value, said spring bearing being formed by two spring assemblies (16a, b) arranged along both sides of the force sensor (12) in the longitudinal direction of the spindle (3) wherein the pretensionings of the springs (18a, b) of spring assemblies (16a, b) correspond to said limit value.

**9.** The joining unit according to any of claims 7 or 8, **characterized in that** said limit value corresponds to the sum of the nominal joining force and a tolerance value.

**10.** The joining unit according to any of claims 8 or 9, **characterized in that** a switch (20a, b) is assigned to each of the spring assemblies (16a, b) wherein if the limit value for one of the spring assemblies (16a, b) is exceeded the corresponding switch (20a, b) generates a switch signal that is evaluated within the controller for actuating the emergency stop.

**11.** The joining unit according to any of claims 1 to 10, **characterized in that** said joining unit contains a holding brake (10) that acts on the spindle (3).

**12.** The joining unit according to any of claims 1 to 11, **characterized in that** the mechanical components thereof have a modular design to be adaptable to different strokes of the joining tool (9) to be performed during the joining process.

**13.** The joining unit according to any of claims 2 to 12, **characterized in that** the electric drive constituting the hollow shaft motor (4) contains a stator (4a) supported in a housing (2) as well as a rotor (4b) mounted on a tubular body firmly attached to and enclosing the spindle (3).

**14.** The joining unit according to claim 13, **characterized in that** adjacent to and extending coaxially with the spindle (3) is a plunger (7) to the free end of which the joining tool (9) can be attached, and further **characterized in that** said plunger (7) is guided in a guide bush (8) supported in the housing (2) whereby the rotational movement of the spindle (3) caused by the electric motor is transformed into a longitudinal movement of the plunger (7).

**15.** The joining unit according to claim 14, **characterized in that** the components with modular design are formed by the spindle (3) and the housing (2).

**Revendications**

**1.** Unité d'assemblage (1) comprenant un système d'entraînement de broches sous la forme d'un moteur à arbre creux (4) qui entoure une broche (3) de manière à obtenir un mouvement linéaire d'un outil d'assemblage (9) pour réaliser un processus d'assemblage, ladite unité d'assemblage (1) comprenant des moyens pour définir et/ou déterminer les forces exercées pendant le processus d'assemblage et/ou le mouvement de l'outil d'assemblage (9), **caractérisée en ce que** ledit moteur à arbre creux (4) comprend un moteur électrique incluant un contrôleur destiné à commander celui-ci, ledit contrôleur constituant un élément du moteur électrique et étant destiné à commander celui-ci; en outre **caractérisée en ce que** ledit contrôleur a intégré au moins une partie des moyens pour définir et/ou déterminer les forces exercées pendant le processus d'assemblage et/ou le mouvement de l'outil d'assemblage (9); **en ce que** ladite unité d'assemblage (1) inclue un capteur de position rotatif pour déterminer la position rotative actuelle de la broche (3) entraînée par le moteur électrique ainsi qu'un capteur de force (12) pour déterminer les forces exercées sur l'outil d'assemblage (9); et **en ce qu'**une évaluation force-déplacement du processus d'assemblage est réalisée dans ledit contrôleur en fonction des signaux des capteurs de position rotatif et de force (12).

**2.** L'unité d'assemblage selon la revendication 1, **caractérisée en ce que** des ensembles de positions sont enregistrés dans le contrôleur où ils peuvent être activés pour le préréglage des processus d'assemblage.

**3.** L'unité d'assemblage selon la revendication 1 ou 2, **caractérisée en ce qu'**une unité de commande est intégrée dans ledit contrôleur pour effectuer un contrôle des forces; et **en ce que** pendant ledit contrôle des forces la position cible prédéfinie dans l'ensemble de positions actuellement activé est ajustée si la force déterminée par le capteur de force (12) dépasse une valeur de seuil prédéterminée.

**4.** L'unité d'assemblage selon la revendication 4, **caractérisée en ce que** pendant une variation de force l'ajustement de la position cible est effectué en sens inverse du mouvement de l'outil d'assemblage (9).

**5.** L'unité d'assemblage selon l'une quelconque des revendications 3 ou 4, **caractérisée en ce que** pendant le contrôle des forces la vitesse de l'outil d'assemblage (9) est modifiée en fonction de la force déterminée par le capteur de force (12).

**6.** L'unité d'assemblage selon l'une quelconque des revendications 1 à 5, **caractérisée en ce que** ladite unité d'assemblage comprend un interrupteur de fin de course pour effectuer un arrêt d'urgence du moteur électrique.

**7.** L'unité d'assemblage selon la revendication 6, **caractérisée en ce que** ledit interrupteur de fin de course est actionné si la force exercée sur l'outil d'assemblage (9) dépasse une valeur limite.

**8.** L'unité d'assemblage selon la revendication 7, **caractérisée en ce qu'**un palier de ressort du capteur de force (12) est prévu pour prédéfinir ladite valeur limite, ledit palier de ressort étant formé par deux assemblages de ressorts (16a, b) disposés de part et d'autre du capteur de force (12) dans la direction longitudinale de la broche (3), dans laquelle les précontraintes desdits ressorts (18a, b) des assemblages de ressorts (16a, b) correspondent à ladite valeur limite.

**9.** L'unité d'assemblage selon l'une quelconque des revendications 7 ou 8, **caractérisée en ce que** ladite valeur limite correspond à la somme de la force d'assemblage nominale et d'une valeur de tolérance.

**10.** L'unité d'assemblage selon l'une quelconque des revendications 8 ou 9, **caractérisée en ce qu'**un interrupteur (20a, b) est assigné à chacun des assemblages de ressorts (16a, b) dans laquelle, si la valeur limite pour l'un des assemblages de ressorts (16a, b) est exercée, l'interrupteur (20a, b) respectif génère un signal d'interrupteur qui est évalué dans le contrôleur pour actionner l'arrêt d'urgence.

**11.** L'unité d'assemblage selon l'une quelconque des revendications 1 à 10, **caractérisée en ce que** ladite unité d'assemblage contient un frein de maintien (10) agissant sur la broche (3).

**12.** L'unité d'assemblage selon l'une quelconque des revendications 1 à 11, **caractérisée en ce que** les composants électroniques de celle-ci sont de conception modulaire pour s'adapter à des longueurs de course différentes de l'outil d'assemblage (9) à être réalisées pendant le processus d'assemblage.

**13.** L'unité d'assemblage selon l'une quelconque des revendications 2 à 12, **caractérisée en ce que** le moteur électrique qui constitue le moteur à arbre creux (4) contient un stator (4a) logé dans un boîtier (2) ainsi qu'un rotor (4b) monté sur un corps tubulaire fixé à la broche (3) de manière ferme et enfermant cette dernière.

**14.** L'unité d'assemblage selon la revendication 13, **caractérisée en ce qu'**un piston (7) qui est adjacent à la broche (3) s'étend de manière coaxiale par rapport à cette dernière, à l'extrémité libre de celui-ci on peut monté l'outil d'assemblage (9), et en outre **caractérisée en ce que** ledit piston (7) est guidé dans un canon (8) logé dans le boîtier (2) de telle sorte que le mouvement de rotation de la broche (3) provoqué par le moteur électrique est transformé en un mouvement longitudinal du piston (7).

**15.** L'unité d'assemblage selon la revendication 14, **caractérisée en ce que** les éléments de conception modulaire sont constitués par la broche (3) et le boîtier (2).

Fig. 1

1

9

7  8  6  4b  4  4a  3  11

12  2  5

5a
10

EP 2 099 584 B1

# Fig. 2

a       b       c       d       e       f

Grundstellung    Leerhub 1    Fügen 1    Leerhub 2    Fügen 2    Rückhub

EP 2 099 584 B1

## Fig. 3

EP 2 099 584 B1

# Fig. 4

Kraft

$T_1$

$T_2$

Weg

# Fig. 5

3

17a

18a    18a

20a    16a

21    19a    15

20b    12

17b    19b    16b

18b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20305789 U1